# EUROPÄISCHE PATENTSCHRIFT

(11) **EP 0 964 886 B1**
(45) Veröffentlichungstag und Bekanntmachung des Hinweises auf die Patenterteilung: **27.07.2005**
(21) Anmeldenummer: 98910720.6
(22) Anmeldetag: 02.03.1998
(51) Int. Cl.: C08K 5/00, C08K 13/02, C08L 67/00, C08L 77/00

(54) **FLAMMGESCHÜTZTE POLYMERFORMMASSEN**
FLAMEPROOF POLYMER MOULDING MATERIAL
MATIERES MOULABLES POLYMERES IGNIFUGEES

(30) Priorität: 04.03.1997 DE 19708726
(43) Veröffentlichungstag der Anmeldung: 22.12.1999
(73) Patentinhaber: Ticona GmbH, 65451 Kelsterbach (DE)
(72) Erfinder: KLEINER, Hans-Jerg, D-61476 Kronberg (DE); BUDZINSKY, Winfried, D-65812 Bad Soden (DE)
(86) Internationale Anmeldenummer: PCT/EP1998/001152
(87) Internationale Veröffentlichungsnummer: WO 1998/039381

(56) Entgegenhaltungen:
- EP-A- 0 699 708
- DE-A- 2 447 727
- DE-A- 2 915 116
- DE-A- 3 140 520

## Beschreibung

Die Erfindung betrifft flammgeschützte Polyester- und Polyamidformmassen, die Aluminiumphosphinate, Aluminiumhydroxide und/oder Aluminiumphosphonate und/oder Aluminiumphosphate enthalten.

Polymere werden häufig dadurch flammfest gemacht, daß man diesen phosphorhaltige oder halogenhaltige Verbindungen oder Gemische davon zusetzt. Einige Polymere werden bei hohen Temperaturen, z.B. bei 250°C oder höheren Temperaturen verarbeitet. Aus diesem Grunde eignen sich viele bekannte Flammhemmer nicht für solche Anwendungen, weil sie zu flüchtig oder nicht ausreichend hitzebeständig sind.
Aluminiumsalze von Phosphinsäuren sind thermisch stabil und bereits als flammhemmende Zusätze für Polyester und Polyamide vorgeschlagen
(EP-A-0 699 708). Die zur Herstellung benötigten Phosphinsäuren sind jedoch relativ teuer. Aus Gründen der Wirtschaftlichkeit besteht daher das Bedürfnis nach Polymerformmassen mit Phosphinsäuresalzen als Flammhemmer, die kostengünstiger produziert werden können.

Gegenstand der Erfindung ist eine Polymerformmasse, die ein Phosphinsäuresalz der Formel (I) und/oder ein Diphosphinsäuresalz der Formel (II) und/oder deren Polymere, 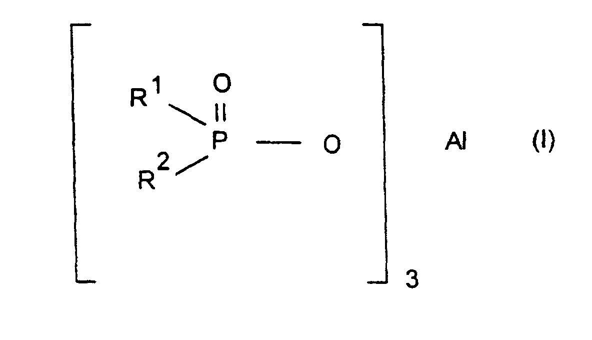 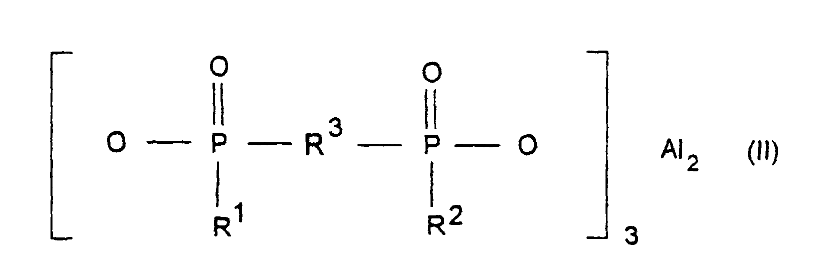 worin R¹ bzw. R² ein C₁-C₆-Alkyl, vorzugsweise C₁-C₃-Alkyl, linear oder verzweigt, z.B. Methyl, Ethyl, n-Propyl, iso-Propyl, n-Butyl oder tert.-Butyl ist, wobei R¹ und R² auch zu einem Ring verbunden sein können, und R³ ein C₁-C₁₀-Alkylen, linear oder verzweigt, z.B. Methylen, Ethylen, n-Propylen, iso-Propylen, n-Butylen, tert.-Butylen, n-Pentylen, n-Octylen, n-Dodecylen oder Phenylen ist,
sowie Aluminiumhydroxid und/oder Aluminiumphosphat und/oder Aluminiumphosphonat der allgemeinen Formel (III) enthält, 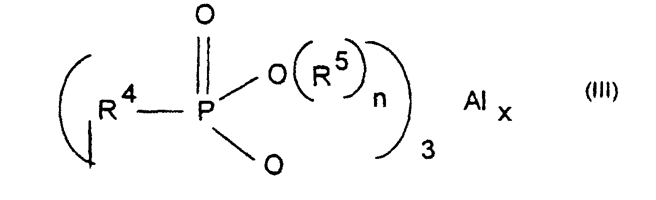 worin R⁴ ein C₁-C₆-Alkyl ist, vorzugsweise C₁-C₃-Alkyl, linear oder verzweigt, z.B. Methyl, Ethyl, n-Propyl oder iso-Propyl, R⁵ ein C₁-C₃-Alkyl, bevorzugt Methyl, n = 0 oder 1 und X = 1, wenn n = 1, bzw. X = 2, wenn n = 0.

Als Polymermasse seien Polyester- und Polyamidformmassen, insbesondere Polyethylen- und Polybutylenterephthalat genannt. Als Aluminiumsalze von Phosphinsäuren (Aluminiumphosphinate) seien beispielsweise genannt: Aluminiumsalze aus Dimethylphosphinsäure, Ethylmethylphosphinsäure, lsopropylmethylphosphinsäure, Methan-1,2-di(methylphosphinsäure) und Benzol-1,4-(dimethylphosphinsäure), des 1-Hydroxy-3-methyl-2,5-dihydro-1H-phosphol-1-oxids und des 1-Hydroxy-2,5-dihydro-1H-phosphol-1-oxids. Als Aluminiumsalze von Phosphonsäuren (Aluminiumphosphonate) seien beispielsweise genannt: Aluminiumsalz des Methanphosphonsäuremonomethylesters, des Propanphosphonsäuremonomethylesters, der Methanphosphonsäure, der Ethanphosphonsäure und der Propanphosphonsäure.

Die Aluminiumphosphinate und -phosphonate können nach bekannten Methoden hergestellt werden. Die entsprechenden Säuren werden dabei in wässeriger Lösung mit Aluminiumhydroxid umgesetzt.

Die Herstellung der erfindungsgemäßen Salzgemische ist ebenfalls einfach, sie erfolgt durch intensives Mischen oder Mahlen. Es kann jedoch im Einzelfall vorteilhaft sein, spezielle Herstellmethoden zu verwenden. So wird z.B. ein Gemisch aus einem Aluminiumsalz der Ethyl-methylphosphinsäure und Aluminiumhydroxid im Gewichtsverhältnis von ca. 70:30 dadurch hergestellt, daß die Ethylmethylphosphinsäure mit Aluminiumhydroxid im Molverhältnis 1:1 umgesetzt wird. Weiterhin können Gemische der Aluminiumphosphinate mit Phosphonaten und Phosphorsäure hergestellt werden, indem die entsprechenden Säuren im gewünschten Molverhältnis gemischt und mit Aluminiumhydroxid im entsprechenden Molverhältnis umgesetzt werden. Beispielsweise kann man Ethylmethylphosphinsäure und Methanphosphonsäuremonomethylester im Gewichtsverhältnis 80:20 mit entsprechend stöchiometrischen Mengen Aluminiumhydroxid in Eisessig als Lösungsmittel entsprechend der Deutschen Patentanmeldung Nr. 196 45 125.6 umsetzen.

Die Mengen der den Polymeren zuzusetzenden Salzgemische können innerhalb weiter Grenzen variieren. Im allgemeinen verwendet man 5 bis 35 Gew.-%, bezogen auf das Polymer, bevorzugt 10 bis 25 Gew.-%, insbesondere 10 bis 20 Gew.-%. Die optimale Menge des Salzgemisches hängt von der Natur des Polymeren und der Art des eingesetzten Salzgemisches ab und kann durch Versuche leicht bestimmt werden.
Das Verhältnis der Aluminiumphosphinate zu den anderen Komponenten des Salzgemisches kann ebenfalls innerhalb weiter Grenzen variieren, Im allgemeinen verwendet man ca. 50 Gew.-% Aluminiumphosphinat, bevorzugt 70 bis 80 Gew.-% bezogen auf das Salzgemisch.

Die Salzgemische sind thermisch stabil, zersetzen die Polymeren nicht bei der Verarbeitung und beeinflußen den Herstellprozess der Polymerformmasse nicht. Die Salzgemische sind unter Herstellungs- und Verarbeitungsbedingungen für Polymere nicht flüchtig.

Die erfindungsgemäßen Salzgemische können je nach Art des verwendeten Polymeren und der gewünschten Eigenschaften in verschiedener physikalischer Form angewendet werden. So können die Salzgemische z.B. zur Erzielung einer besseren Dispersion im Polymeren zu einer feinteiligen Form vermahlen werden.

Die Salzgemische können in das Polymer eingearbeitet werden, indem beide vermischt und anschließend in einem Compoundieraggregat (z.B. in einem Zweischneckenextruder) das Polymer aufgeschmolzen und das Salzgemisch in der Polymerschmelze homogenisiert wird. Die Schmelze kann als Strang abgezogen, gekühlt und granuliert werden. Das Salzgemisch kann auch direkt in das Compoundieraggregat dosiert werden.

Es ist ebenso möglich, die flammhemmenden Zusätze einem fertigen Granulat beizumischen und direkt auf einer Spritzgießmaschine zu verarbeiten oder vorher in einem Extruder aufzuschmelzen, zu granulieren und nach einem Trocknungsprozeß zu verarbeiten.

Die Salzgemische können auch während des Herstellprozesses des Polymeren zugegeben werden.

Dem Polymer können neben den Salzgemischen auch Füll- und Verstärkungsstoffe wie Glasfasern oder Mineralien wie Kreide zugesetzt werden. Daneben können die Produkte andere Zusätze wie Stabilisatoren, Gleitmittel, Farbmittel, Füllstoffe, Nukleierungsmittel oder Antistatika enthalten.

### Beispiel 1

7 Teile Aluminiumsalz der Ethyl-methylphosphinsäure und 3 Teile Aluminiumhydroxid wurden gut gemischt. Die Mischung ist überraschenderweise bei thermischer Belastung bis 285°C stabil, darüber hinaus beginnt eine deutliche Wasserabspaltung; demgegenüber spaltet Aluminiumhydroxid bereits ab 200°C Wasser ab.
Aus der Salzmischung und Polybutylenterephthalat (PBT) wurden mit 30 % Glasfasern verstärkte Compounds ohne weitere Zusätze hergestellt, Prüfkörper der Dicke 0,8 mm gespritzt und mit folgendem Ergebnis geprüft:

| Konzentration | Brandklasse UL 94 |
|---|---|
| 20 % | V2 |

Vergleichsweise wurde nur das Aluminiumsalz der Ethyl-methylphosphinsäure an Stelle des Salzgemisches eingesetzt. Dieser Vergleich fand unter denselben Bedingungen statt, jedoch bei einer Konzentration von 14 %. Dies entspricht dem gleichen Gehalt an Aluminiumsalz der Ethyl-methylphosphinsäure einer Zusammensetzung, die 20 % der oben genannten Salzmischung enthält.
Im Vergleichsversuch wurde Brandklasse UL 94 V 2 nicht erreicht.

### Beispiel 2

7 Teile Aluminiumsalz der Ethyl-methylphosphinsäure und 3 Teile A0luminiumphosphat wurden gut gemischt. Die Mischung ist bei thermischer Belastung bis 360°C stabil.
Aus dieser Salzmischung und PBT wurden mit 30 % Glasfasern verstärkte Compounds ohne weitere Zusätze hergestellt, Prüfkörper der Dicke 0,8 mm gespritzt und mit folgendem Ergebnis geprüft:

| Konzentration % | Brandklasse UL94 | Bruchspannung N/mm² | Bruchdehnung % | E-Modul N/mm² |
|---|---|---|---|---|
| 20 | V1 | 87,5 | 1,2 | 10741 |

Vergleichsweise wurde nur das Aluminiumsalz der Ethyl-methylphosphinsäure eingesetzt. Der Vergleich fand wieder unter denselben Bedingungen und bei einer Konzentration von 14 % statt.

| Konzentration % | Brandklasse UL94 | Bruchspannung N/mm² | Bruchdehnung % | E-Modul N/mm² |
|---|---|---|---|---|
| 14 | -- | 116,3 | 1,8 | 11240 |

### Beispiel 3

7 Teile Aluminiumsalz der Ethyl-methylphosphinsäure und 3 Teile Aluminiumsalz des Methanphosphonsäuremonomethylesters wurden gut gemischt.
Aus dieser Salzmischung und PBT wurden mit 30 % Glasfasern verstärkte Compounds ohne weitere Zusätze hergestellt, Prüfkörper der Dicke 0,8 mm gespritzt und mit folgenden Ergebnis geprüft.

| Konzentration | Brandklasse | Bruchspannung | Bruchdehnung | E-Modul |
|---|---|---|---|---|
| % | UL 94 | N/mm² | % | N/mm² |
| 20 | VO | 96,1 | 1,2 | 11635 |

### Vergleichsversuch zu Beispiel 3

Das Aluminiumsalz des Methanphosphonsäuremonomethylesters wurde eingesetzt, um mit PBT mit 30 % Glasfasern verstärkte Compounds ohne weitere Zusätze herzustellen. Prüfkörper der Dicke 0,8 mm wurden gespritzt und mit folgendem Ergebnis geprüft:

| Konzentration % | Brandklasse UL94 | Bruchspannung N/mm² | Bruchdehnung % | E-Modul N/mm² |
|---|---|---|---|---|
| 20 | -- | 53,7 | 0,6 | 10911 |

## Patentansprüche

1. Flammgeschützte Polymerformmasse, **dadurch gekennzeichnet, daß** sie ein Phosphinsäuresalz der Formel (I) und/oder ein Diphosphinsäuresalz der Formel (II) und/oder deren Polymere, 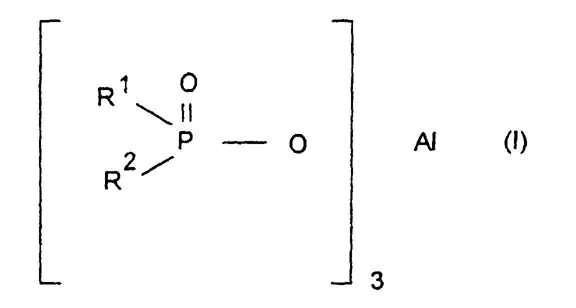 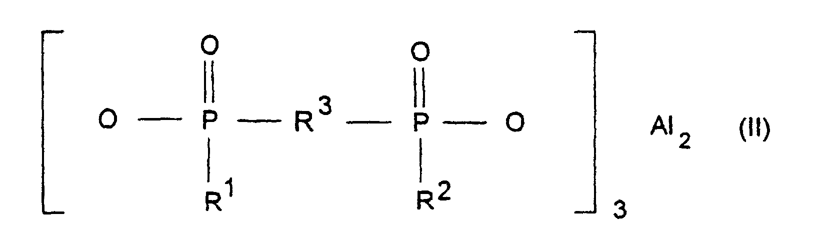 worin R¹ bzw. R² ein C₁-C₆-Alkyl, vorzugsweise C₁-C₃-Alkyl, linear oder verzweigt, z.B. Methyl, Ethyl, n-Propyl, iso-Propyl, n-Butyl oder tert.-Butyl ist, wobei R¹ und R² auch zu einem Ring verbunden sein können, und R³ ein C₁-C₁₀-Alkylen, linear oder verzweigt, z.B. Methylen, Ethylen, n-Propylen, iso-Propylen, n-Butylen, tert.-Butylen, n-Pentylen, n-Octylen, n-Dodecylen oder Phenylen ist,
sowie Aluminiumhydroxid und/oder Aluminiumphosphat und/oder Aluminiumphosphonat der allgemeinen Formel (III) enthält, 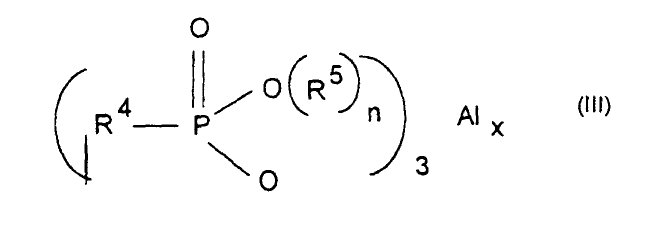 worin R⁴ ein C₁-C₆-Alkyl ist, vorzugsweise C₁-C₃-Alkyl, linear oder verzweigt, z.B. Methyl, Ethyl, n-Propyl oder iso-Propyl, R⁵ ein C₁-C₃-Alkyl, bevorzugt Methyl, n = 0 oder 1 und X = 1, wenn n = 1, bzw. X = 2, wenn n = 0.

2. Polymerformmasse nach Anspruch 1, **dadurch gekennzeichnet, daß** sie Polyester, insbesondere Polyethylenterephthalat oder Polybutylenterephthalat, oder Polyamid enthält.

3. Polymerformmasse nach Anspruch 1 oder 2, **dadurch gekennzeichnet, daß** sie Aluminiumsalz der Dimethylphosphinsäure, der Ethylmethylphosphinsäure, der Isopropylmethylphosphinsäure, der Methan-1,2-di(methylphosphinsäure), der Benzol-1,4-(dimethylphosphinsäure), des 1-Hydroxy-3-methyl-2,5-dihydro-1H-phosphol-1-oxids oder des 1-Hydroxy-2,5-dihydro-1H-phosphol-1-oxids enthält.

4. Polymerformmasse nach einem oder mehreren der Ansprüche 1 bis 3, **dadurch gekennzeichnet, daß** sie Aluminiumsalz des Methanphosphonsäuremonomethylesters, des Propanphosphonsäuremonomethylesters, der Methanphosphonsäure, der Ethanphosphonsäure oder der Propanphosphonsäure oder Gemische davon enthält.

5. Polymerformmasse nach einem oder mehreren der Ansprüche 1 bis 4, **dadurch gekennzeichnet, daß** die Menge der Aluminiumsalze 5 bis 35 Gew.-%, bevorzugt 10 bis 25 Gew.-%, bezogen auf das Polymer, beträgt.

6. Polymerformmasse nach einem oder mehreren der Ansprüche 1 bis 5, **dadurch gekennzeichnet, daß** die Menge Aluminiumphosphinat 50 Gew.-% oder mehr, bevorzugt 70 bis 80 Gew.-% bezogen auf die Gesamtmenge von Aluminiumsalzen in der Formmasse ist.

7. Polymerformmasse nach einem oder mehreren der Ansprüche 1 bis 6, **dadurch gekennzeichnet, daß** sie Glasfasern, Mineralien oder Farbmittel enthält.

## Claims

1. Flame-retardant polymeric moulding composition, **characterized in that** it comprises a phosphinate of the formula (I) and/or a diphosphinate of the formula (II) and/or polymers of these, 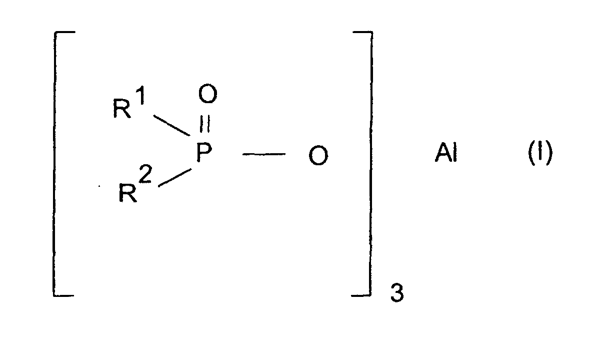 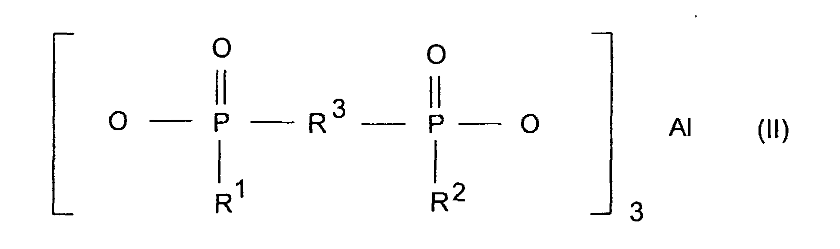 where R¹ and/or R² is C₁-C₆-alkyl, preferably C₁-C₃-alkyl, which may be linear or branched, e.g. methyl, ethyl, n-propyl, isopropyl, n-butyl or tert-butyl, where R¹ and R² may also be linked to a ring, and R³ is C₁-C₁₀-alkylene, which may be linear or branched, e.g. methylene, ethylene, n-propylene, isopropylene, n-butylene, tert-butylene, n-pentylene, n-octylene, n-dodecylene or phenylene,
and also aluminium hydroxide and/or aluminium phosphate and/or aluminium phosphonate of the formula (III), 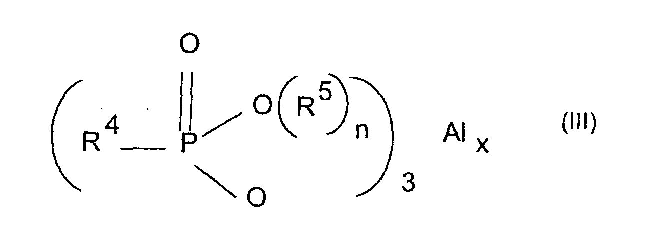 where R⁴ is C₁-C₆-alkyl, preferably C₁-C₃-alkyl, which may be linear or branched, e.g. methyl, ethyl, n-propyl or isopropyl, R⁵ is C₁-C₃-alkyl, preferably methyl, n is 0 or 1, and X is 1 if n is 1, and X is 2 if n is 0.

2. Polymeric moulding composition according to Claim 1, **characterized in that** it comprises polyester, in particular polyethylene terephthalate or polybutylene terephthalate, or polyamide.

3. Polymeric moulding composition according to Claim 1 or 2, **characterized in that** it comprises an aluminium salt of dimethylphosphinic acid, of ethylmethylphosphinic acid, of isopropylmethylphosphinic acid,
of methane-1,2-di(methylphosphinic acid), of benzene-1,4-(dimethylphosphinic acid), of 1-hydroxy-3-methyl-2,5-dihydro-1H-phosphole-1-oxide or of 1-hydroxy-2,5-dihydro-1H-phosphole-1-oxide.

4. Polymeric moulding composition according to one or more of Claims 1 to 3, **characterized in that** it comprises an aluminium salt of monomethyl methanephosphonate, of monomethyl propanephosphonate, of methanephosphonic acid, of ethanephosphonic acid or of propanephosphonic acid or mixtures of these.

5. Polymeric moulding composition according to one or more of Claims 1 to 4, **characterized in that** the amount of the aluminium salts is from 5 to 35% by weight, preferably from 10 to 25% by weight, based on the polymer.

6. Polymeric moulding composition according to one or more of Claims 1 to 5, **characterized in that** the amount of aluminium phosphinate is 50% by weight or more, preferably from 70 to 80% by weight, based on the total amount of aluminium salts in the moulding composition.

7. Polymeric moulding composition according to one or more of Claims 1 to 6, **characterized in that** it comprises glass fibres, minerals or colorants.

## Revendications

1. Matière à mouler polymère ignifugée, **caractérisée en ce qu'**elle contient un sel d'acide phosphinique de formule (I) et/ou un sel d'acide diphosphinique de formule (II) et/ou des polymères de ceux-ci, 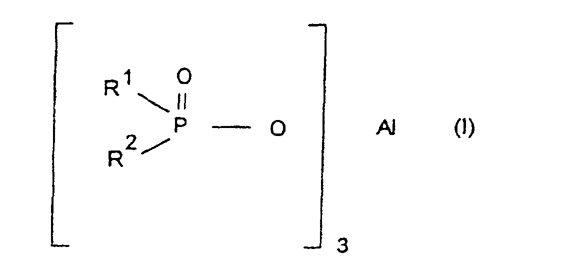 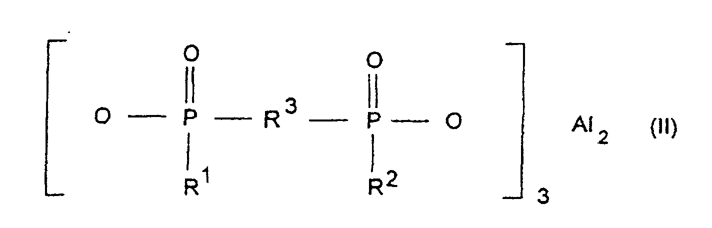 formules dans lesquelles R¹ ou, respectivement, R² est un groupe alkyle en C₁-C₆, de préférence alkyle en C₁-C₃, linéaire ou ramifié, par exemple méthyle, éthyle, n-propyle, isopropyle, n-butyle ou tert-butyle, R¹ et R² pouvant également être reliés en un cycle, et R³ est un groupe alkylène en C₁-C₁₀, linéaire ou ramifié, par exemple méthylène, éthylène, n-propylène, isopropylène, n-butylène, tert-butylène, n-pentylène, n-octylène, n-dodécylène ou phénylène,
ainsi qu'un hydroxyde d'aluminium et/ou phosphate d'aluminium et/ou phosphonate d'aluminium de formule générale (III), 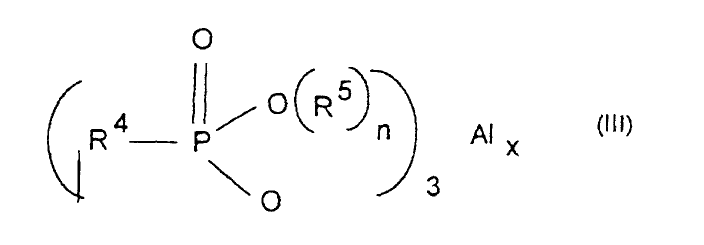 dans laquelle R⁴ est un groupe alkyle en C₁-C₆, de préférence alkyle en C₁-C₃, linéaire ou ramifié, par exemple méthyle, éthyle, n-propyle ou isopropyle, R⁵ est un groupe alkyle en C₁-C₃, de préférence méthyle, n = 0 ou 1 et X = 1 lorsque n = 1 ou X = 2 lorsque n = 0.

2. Matière à mouler polymère selon la revendication 1, **caractérisée en ce qu'**elle contient un polyester, de préférence du poly(éthylène-téréphtalate) ou du poly(butylène-téréphtalate) ou un polyamide.

3. Matière à mouler polymère selon la revendication 1 ou 2, **caractérisée en ce qu'**elle contient un sel d'aluminium de l'acide diméthylphosphinique, de l'acide éthylméthylphosphinique, de l'acide isopropylméthylphosphinique, de l'acide méthane-1,2-di(méthylphosphinique), de l'acide benzène-1,4-(diméthylphosphinique), du 1-oxyde de 1-hydroxy-3-méthyl-2,5-dihydro-1H-phosphol ou du 1-oxyde de 1-hydroxy-2,5-dihydro-1H-phosphol.

4. Matière à mouler polymère selon une ou plusieurs des revendications 1 à 3, **caractérisée en ce qu'**elle contient un sel d'aluminium du méthane-phosphonate de monométhyle, du propanephosphonate de monométhyle, de l'acide méthanephosphonique, de l'acide éthanephosphonique ou de l'acide propanephosphonique, ou des mélanges de ceux-ci.

5. Matière à mouler polymère selon une ou plusieurs des revendications 1 à 4, **caractérisée en ce que** la quantité des sels d'aluminium va de 5 à 35 % en poids, de préférence de 10 à 25 % en poids, par rapport au polymère.

6. Matière à mouler polymère selon une ou plusieurs des revendications 1 à 5, **caractérisée en ce que** la quantité de phosphinate d'aluminium est de 50 % en poids ou plus, de préférence de 70 à 80 % en poids, par rapport à la quantité totale de sels d'aluminium dans la matière à mouler.

7. Matière à mouler polymère selon une ou plusieurs des revendications 1 à 6,**caractérisée en ce qu'**elle contient des fibres de verre, des minéraux ou des colorants.
